Europäisches Patentamt

European Patent Office

Office européen des brevets

(11) Veröffentlichungsnummer: **0 177 806**
**B1**

(12) **EUROPÄISCHE PATENTSCHRIFT**

(45) Veröffentlichungstag der Patentschrift:
18.01.89

(21) Anmeldenummer: 85111668.1

(22) Anmeldetag: 16.09.85

(51) Int. Cl.⁴: **B 01 D 53/36**, C 01 B 17/775

(54) Verfahren zur Entschwefelung von Rauchgasen.

(30) Priorität: 29.09.84 DE 3435931

(43) Veröffentlichungstag der Anmeldung:
16.04.86 Patentblatt 86/16

(45) Bekanntmachung des Hinweises auf die Patenterteilung:
18.01.89 Patentblatt 89/3

(84) Benannte Vertragsstaaten:
AT BE DE FR GB IT NL

(56) Entgegenhaltungen:
DE-A- 2 137 847
DE-A- 2 235 123
GB-A- 994 070
US-A- 3 953 578

CHEMICAL ABSTRACTS, Band 89, Nr. 4, 24. Juli 1978,
Seite 365, Zusammenfassung Nr. 30195x, Columbus,
Ohio, US

(73) Patentinhaber: BAYER AG, Konzernverwaltung RP
Patentabteilung, D-5090 Leverkusen 1 Bayerwerk (DE)

(72) Erfinder: Lailach, Günter, Dr., Bodelschwinghstrasse 23,
D-4150 Krefeld (DE)
Erfinder: Gerken, Rudolf, Dr., Rather Strasse 79,
D-4150 Krefeld (DE)
Erfinder: Schultz, Karl-Heinz, Dr., Deswatinesstrasse 61,
D-4150 Krefeld (DE)

## Beschreibung

Die vorliegende Erfindung betrifft ein Verfahren zur Entschwefelung SO₂- und halogenwasserstoffhaltiger Rauchgase durch katalitische Oxidation des Schwefeldioxids an feuchter Aktivkohle bei Temperaturen von 45 bis 70°C unter Bildung von 3- bis 20%iger verdünnter Schwefelsäure.

Die Entschwefelung von Rauchgasen, insbesondere der grossen Rauchgasmengen, die bei der Verstromung von Kohle und schwerem Heizöl in Kraftwerken anfallen, ist eine aktuelle Forderung. Die bisher bekannten Verfahren sind mit erheblichem apparativen Aufwand verbunden. Die meisten Verfahren basieren auf der Umsetzung von Ca-Verbindungen, insbesondere gemahlenem Kalkstein, zu Gips. Der geringe Wert dieses Entproduktes, das infolge seines hohen Wassergehaltes einen erheblichen Aufwand für Lagerung, Entwässerung und Transport zu Deponien oder Verwendern erfordert, stellt keine merkliche wirtschaftliche Entlastung des Gesamtaufwandes dar.

Aus der DE-A-2 137 847 ist ein Verfahren und eine Vorrichtung zur Entschwefelung von Abgasen bekannt, bei dem ein Teil des Abgases über Aktivkohle zwecks Desorption des Schwefeldioxids geleistet wird. Die Temperatur der Aktivkohle liegt dabei bei über 100°C.

Weiter ist aus der GB-A-994 070 bekannt, die Entschwefelung von Prozessabgasen durch Oxidation des Schwefeldioxides in Gegenwart von Wasser zu Schwefelsäure an speziellen Aktivkohle-Katalysatoren durchzuführen. Das Verfahren, das als «Sulfacid-Verfahren» bekannt wurde, führt im allgemeinen zu einer 5- bis 20%igen Schwefelsäure. Die fehlenden Verbindungsmöglichkeiten für derart verdünnte Schwefelsäure sowie die Forderung, dass das SO₂-haltige in den Festbettreaktor eingeleitete Gas weniger als 20 mg Staub/m³ enthalten soll, führten dazu, dass dieses Verfahren bisher als mögliche Alternative für die obengenannten Verfahren der Rauchgasentschwefelung nicht berücksichtigt wurde.

Für die Entschwefelung von Rauchgasen mit einem relativ hohen Gehalt an HCl und HF sind darüber hinaus keine Verfahren bekannt.

Aus Chemical Abstracts 89: 30195x geht ein Verfahren zur Reinigung schwefeldioxid-enthaltender Gase hervor, die darüber hinaus auch Halogenverbindungen als Bestandteile enthalten. Die Entfernung dieser Halogenverbindungen geschieht hier durch ein separates Eindampfen der Säure im Vakuum.

Das Ziel der vorliegenden Erfindung ist es, ein wirtschaftliches, apparativ einfaches und betriebssicheres Verfahren zur Entschwefelung von Rauchgasen zur Verfügung zu stellen, das die Nachteile der bekannten Verfahren nicht aufweist.

Dieses Ziel wird erreicht durch ein Verfahren, bei dem das aus dem Kraftwerk abgegebene SO₂-haltige Rauchgas vor der Oxidation am Aktivkohlekontakt einer Wäsche (I) mit einer 50- bis 85%igen Schwefelsäure und einer Wäsche (II) mit einer 5- bis 25%igen Schwefelsäure unterworfen wird.

Gegenstand der vorliegenden Erfindung ist somit ein Verfahren zur Entschwefelung SO₂- und halogenwasserstoffhaltiger Rauchgase durch katalytische Oxidation des Schwefeldioxids an feuchter Aktivkohle bei Temperaturen von 45 bis 70°C unter Bildung von 3- bis 20%iger verdünnter Schwefelsäure, welches dadurch gekennzeichnet ist, dass die verdünnte Schwefelsäure durch Kontakt mit den heissen zu entschwefelnden Rauchgasen zweistufig in Gleich- oder Gegenstromwärmeaustauschern auf eine Schwefelsäurekonzentration von 60 bis 85% eingedampft wird und in der verdünnten Schwefelsäure gelöste Chlor- und Fluorwasserstoffe durch Verdampfung aus einem Gemisch der verdünnten Schwefelsäure aus der zweiten Stufe des Wäschers mit der konzentrierten Schwefelsäure aus der ersten Stufe des Wäschers erfolgt, wobei das Gemisch eine H₂SO₄-Konzentration von 40 bis 70% aufweist.

Besonders vorteilhaft ist die Ausführungsform des erfindungsgemässen Verfahrens, bei der die zu entschwefelnden Rauchgase eine Temperatur von mindestens 120°C aufweisen.

Gleichzeitig mit der Erhöhung der Schwefelkonzentration auf 60 bis 85% erfolgt dabei eine Abkühlung der Rauchgase auf 90 bis 110°C.

Anschliessend wird eine zweite Wäsche (II) mit 5- bis 25%iger Schwefelsäure durchgeführt, bei der eine Absorption von HCl und HF in der Säure erfolgt. Dadurch werden negative Einflüsse auf die katalytische Umsetzung des SO₂ an der Aktivkohle vermieden. Das etwa 45 bis 70°C heisse, weitgehend von Staub befreite Rauchgas wird durch eine Aktivkohleschicht geleitet, die kontinuierlich oder diskontinuierlich mit so viel Wasser besprüht wird, dass eine 3- bis 20%ige Schwefelsäure abfliesst. Der Gasstrom kann alternativ von unten nach oben oder umgekehrt durch die Kohleschicht geleitet werden.

Beim Durchströmen der Aktivkohleschicht wird das Rauchgas mit Wasserdampf gesättigt und auf 45 bis 55°C abgekühlt. Diese Abkühlung kann vermieden werden, wenn in das Rauchgas vor dem Eintritt in die Aktivkohleschicht, vorzugsweise nach Wäsche (I), Wasserdampf eingeleitet wird, z.B. bei verschiedenen Prozessen als Abdampf anfällt.

Die im Aktivkohlereaktor bei der Entschwefelung anfallende 3- bis 20%ige Schwefelsäure ist nahezu wertlos. Erfindungsgemäss wird diese Säure über den Schwefelsäurekreislauf der Wäsche (II) letztendlich in den Schwefelsäurekreislauf der Wäsche (I) eingespeist, in dem so viel Wasser durch Verdunstungskühlung an das Rauchgas abgegeben wird, dass eine 60- bis 85%ige Schwefelsäure ausgespeist wird. Diese Säure kann entweder direkt eingesetzt werden, z.B. in der Düngemittelindustrie, oder mit relativ geringem Aufwand nach bekannten Verfahren auf einen H₂SO₄-Gehalt von 80 bis 93% eingedampft werden.

Aufgrund der geringen Löslichkeit von HCl und HF in der 50- bis 85%igen Schwefelsäure bei 90 bis 110°C, würden sich diese im Rauchgas in geringen Mengen enthaltenen Verbindungen in dem zur Aktivkohle gelangenden Rauchgas immer weiter anreichern und zu einer Vergiftung des Aktivkohlekatalysators führen, wenn das Rauchgas nach der Wäsche (I) direkt in den Aktivkohlereaktor und die HCl- und HF-haltige Säure aus dem Reaktor direkt in die Wäsche (I) geleitet würde. Dies wird durch die zweite Wäsche (II) der Rauchgase mit 5- bis 25%iger Schwefelsäure bei 50 bis 70°C vermieden. Der Vorteil dabei ist, dass HCl und HF durch Adsorption in der 5- bis 25%igen Schwefelsäure weitgehend aus dem Rauchgas entfernt werden, bevor dieses in den Aktivkohlereaktor eingeleitet wird, und dass die bei der Abkühlung des Rauchgases von 90 bis 110°C auf 45 bis 70°C frei werdende Gaswärme zur Säureeindampfung genutzt wird.

Die Austreibung des HCl und HF aus der Waschsäure des Waschkreislaufs (II) erfolgt durch Mischen der aus der Wäsche (II) ausgespeisten HCl- und HF-haltigen 5- bis 25%igen Schwefelsäure mit so viel 60- bis 85%iger Schwefelsäure aus der Wäsche (I), dass eine 40- bis 70%ige Schwefelsäure resultiert. Aus dieser Schwefelsäure werden durch Strippen mit Luft bzw. Rauchgas oder durch Evakuieren HCl, HF und ein Teil des Wassers verdampft. Die Dämpfe können durch indirekte oder direkte Kühlung kondensiert werden.

In einer bevorzugten Ausführung des erfindungsgemässen Verfahrens erfolgt die Entfernung von Chlor- und Fluorwasserstoff durch Vakuumverdampfung aus einem Gemisch der verdünnten Schwefelsäure aus der zweiten Stufe des Wäschers mit der konzentrierten Schwefelsäure aus der ersten Stufe des Wäschers, wobei das Gemisch eine $H_2SO_4$-Konzentration von 40 bis 70% aufweist.

Ebenso vorteilhaft kann aber auch die Ausführung sein, bei der die Entfernung von Chlor- und Fluorwasserstoff aus einem Gemisch der verdünnten Schwefelsäure aus der zweiten Stufe des Wäschers mit der konzentrierten Schwefelsäure aus der ersten Stufe des Wäschers, wobei das Gemisch eine $H_2SO_4$-Konzentration von 40 bis 70% aufweist, durch Ausblasen mit Luft oder Rauchgas und anschliessendes Auswaschen der Halogenwasserstoffe aus dem Gas mit Wasser erfolgt.

Die Kondensierung der Dämpfe kann vorteilhaft durch direkte Kühlung und Wäsche mit Kühlwasser erreicht werden.

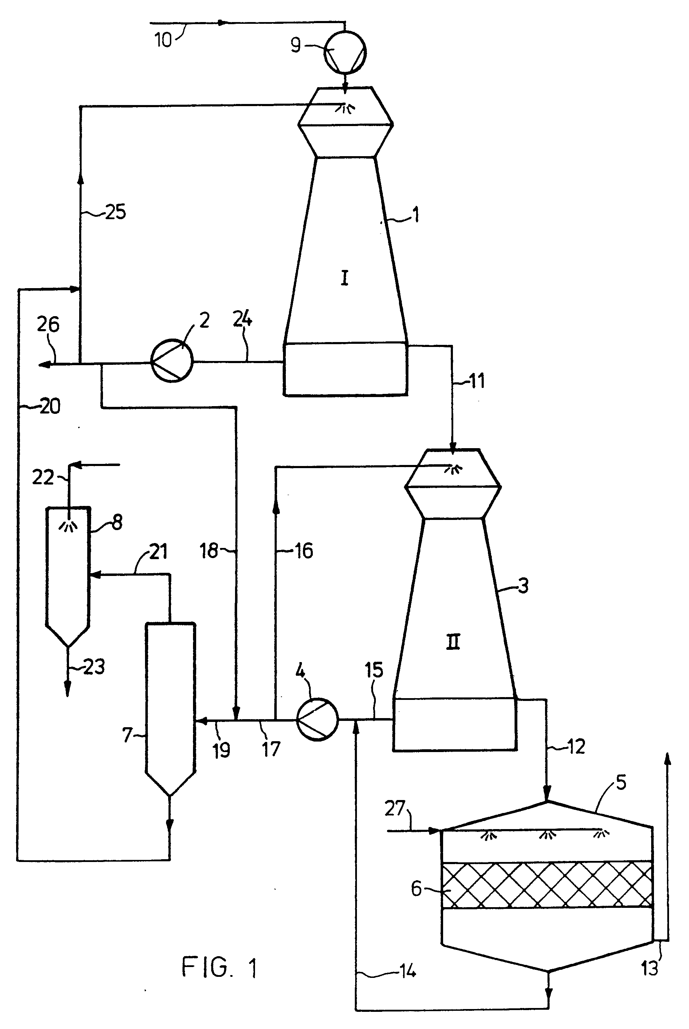

Das erfindungsgemässe Verfahren soll anhand von Fig. 1 verdeutlicht werden. Hier wird eine Rauchgasentschwefelungsanlage dargestellt für die Gesamtstromentschwefelung mit einem Reingas-$SO_2$-Gehalt unter 400 mg/m$^3_n$, bestehend aus einer Gaswäsche (I), in der gleichzeitig eine Rauchgaskühlung und -befeuchtung, Feinstaubentfernung und Schwefelsäurekonzentrierung erfolgt, einer Gaswäsche (II), in der die weitere Gaskühlung bei gleichzeitiger Schwefelsäurekonzentrierung sowie die Feinstaubentfernung und die HCl- und HF-Entfernung aus dem Rauchgas erfolgt, einem Aktivkohlereaktor (5) zur katalytischen Umsetzung des Schwefeldioxides mit Sauerstoff und Wasser zu Schwefelsäure und einer Nebenanlage (7, 8) zur Entfernung von HCl

und HF aus der Schwefelsäure. Das Rauchgas (10) wird mittels des Gebläses (9) durch den Wäscher (1) gefördert, in dem es durch den Kontakt mit 50- bis 85%iger Schwefelsäure auf 90 bis 110°C gekühlt wird.

Das aus dem Wäscher (1) austretende Gas (11) wird im Wäscher (3) mit 5- bis 25%iger Schwefelsäure kontaktiert. Dabei erfolgen eine Abkühlung des Gases auf 50 bis 70°C und die Adsorption des überwiegenden Teils des HCl und der HF in der Schwefelsäure. Das nahezu wasserdampfgesättigte und weitgehend staubfreie Rauchgas (12) wird im Reaktor (5) durch eine feuchte Aktivkohleschicht (6) geleitet, in der aus Schwefeldioxid, Sauerstoff und Wasser Schwefelsäure gebildet wird.

Das aus dem Reaktor (5) austretende Reingas (13) wird direkt oder nach Aufheizen mittels heisser Rauchgase oder eines Teilstromes des Rohgases oder nach indirekter Erwärmung in Wärmetauschern in die Atmosphäre geleitet.

Die in der Aktivkohleschicht (6) des Reaktors (5) gebildete Schwefelsäure wird durch kontinuierliches oder diskontinuierliches Besprühen der Kohleschicht (6) mit Wasser (27) als 3- bis 20%ige Schwefelsäure (14) entfernt und in die Kreislaufsäure (15) der Wäsche (II) eingespeist. In der Wäsche (II) wird aus dem Sumpf des Wäschers (3) 5- bis 25%ige Schwefelsäure (15) mittels der Pumpe (4) abgezogen und im wesentlichen (16) in den Kopfteil des Wäschers gefördert. Ein Teilstrom (17), der dem Strom (14) abzüglich der im Wäscher (3) verdampften Wassermenge entspricht, wird zusammen mit 60- bis 85%iger Schwefelsäure (18) als 40- bis 70%ige Schwefelsäure (19) in einen Vakuumkühler (7) eingespeist. In diesem verdampfen HCl, HF und eine geringe Wassermenge. Die Dämpfe (21) werden in einem Einspritzkondensator (8) mit Kühlwasser (22) kondensiert und als schwach saures Abwasser (23) abgeleitet. Die HCl- und HF-freie Schwefelsäure (20) wird in den Säurekreislauf der Wäsche (I) eingespeist. In dieser Wäsche wird das Rohgas mit 60- bis 85%iger Schwefelsäure (25) gewaschen. Nach Verdampfung eines Teils des Wassers aus der Säure wird die 60- bis 85%ige Schwefelsäure (24) mittels der Kreislaufpumpe (2) aus dem Sumpf des Wäschers (1) abgezogen. Die als Produktion anfallende 60- bis 85%ige Schwefelsäure (26) kann von 90 bis 110°C durch indirekte Kühlung gekühlt oder einer weiteren Eindampfung zugeführt werden.

Die Gaswäsche und die Säureeindampfung können alternativ zu den dargestellten Strahlwäschern auch in Waschtürmen, Venturiwäschern oder ähnlich geeigneten Apparaten im Gleichstrom oder Gegenstrom des Rauchgases zur eingespeisten Schwefelsäure geschehen. Ebenso kann die HCl und HF-Entfernung statt im Vakuumkühler (7) durch Ausblasen der Säure (19) mit Luft oder Rauchgas erfolgen.

Dabei muss die HCl- und HF-beladene Luft oder das Rauchgas anschliessend mit Wasser in einem Gaswäscher gereinigt werden. Sofern eine Verwendungsmöglichkeit für die Säuren aus den Brüden (21) besteht, wird eine indirekte Kühlung dieser Brüden vorgenommen.

Im folgenden wird das erfindungsgemässe Verfahren beispielhaft erläutert, ohne dass hierin eine Einschränkung der Erfindung zu sehen ist.

Beispiel

Das Beispiel betrifft eine Rauchgasentschwefelung entsprechend Fig. 1. 210.000 $m^3_n$/h Rauchgas (10) mit einem Gehalt von 7,15 Vol.-% $H_2O$, 6 Vol.-% $O_2$. 3,3 g $SO_2/m^3_n$, 0,2 g $HCl/m^3_n$ und 30 mg Staub/$m^3_n$ werden mit einer Temperatur von 130°C in den Wäscher (1) eingeleitet. Beim Kontakt mit 69%iger Schwefelsäure (25) werden 3,06 t $H_2O$/h aus dieser Säure verdampft. Aus dem Wäscher (1) gelangt das Rauchgas (11) mit 100°C in den Wäscher (3), in dem es mit 18,9%iger Schwefelsäure (16) gewaschen wird. Das mit 53°C aus dem Wäscher (3) austretende Rauchgas (12) enthält 11,75 Vol.-% $H_2O$, 3,3 g $SO_2/m^3_n$, weniger als 10 mg Staub/$m^3_n$ und Spuren von HCl. Beim Durchströmen des Aktivkohlefestbettes (6) im Reaktor (5) wird der $SO_2$-Gehalt des Rauchgases durch katalytische Oxidation zu Schwefelsäure von 3,3 g/$m^3_n$ auf 350 bis 400 mg/$m^3_n$ im Reingas (13) verringert.

Im Reaktor (5) wird die gebildete Schwefelsäure durch periodisches Bedüsen der Kohleschicht mit 9,75 $m^3$/h Wasser (27) als 8,4%ige Schwefelsäure (14) ausgewaschen. Diese Schwefelsäure wird dem Säurekreislauf des Wäschers (3) zugespeist. Im Wäscher (3) werden 5,75 t $H_2O$/h aus der Schwefelsäure verdampft. 4,63 t/h der 18,9%igen Kreislaufsäure (17), die ausserdem 0,84% HCl enthalten, werden mit 7,15 t/h 70%iger Schwefelsäure (18) aus Wäscher (1) gemischt und in den Vakuumkühler (7) als 50%ige Schwefelsäure mit 80°C (19) eingespeist. Bei 50 mbar verdampfen unter Abkühlung auf 55°C 39 kg HCl/h und 283 kg $H_2O$/h (21), die im Kondensator (8) durch direkten Kontakt mit 18 $m^3$/h Kühlwasser (22) kondensiert werden. Aus dem Kondensator (8) werden die nicht kondensierbaren Gase mittels Vakuumpumpe abgesaugt.

Die HCl-freie 51%ige Schwefelsäure (20) aus dem Vakuumkühler (7) wird in den Säurekreislauf der Wäsche (I) eingespeist. Aus Wäscher (1) werden 1,24 t/h 70%ige Schwefelsäure (26) mit 100°C als Produktion ausgespeist.

**Patentansprüche**

1. Verfahren zur Entschwefelung $SO_2$- und halogenwasserstoffhaltiger Rauchgase durch katalytische Oxidation des Schwefeldioxids an feuchter Aktivkohle bei Temperaturen von 45 bis 70°C unter Bildung von 3- bis 20%iger verdünnter Schwefelsäure, dadurch gekennzeichnet, dass die verdünnte Schwefelsäure durch Kontakt mit den heissen zu entschwefelnden Rauchgasen zweistufig in Gleich- oder Gegenstromwärmeaustauschern auf eine Schwefelsäurekonzentration von 60 bis 85% eingedampft wird und in der verdünnten Schwefelsäure gelöste Chlor- und Fluorwasserstoffe entfernt werden durch Verdampfung aus einem Gemisch der verdünnten Schwefelsäure aus der zweiten Stufe des Wäschers mit der konzentrierten Schwefelsäure aus der ersten Stufe des Wäschers, wobei das Gemisch eine $H_2SO_4$-Konzentration von 40 bis 70% aufweist.

2. Verfahren gemäss Anspruch 1, dadurch gekennzeichnet, dass die zu entschwefelnden Rauchgase eine Temperatur von mindestens 120°C aufweisen.

3. Verfahren gemäss Anspruch 1 oder 2, dadurch gekennzeichnet, dass die Verdampfung durch Vakuumverdampfung erfolgt.

4. Verfahren gemäss Anspruch 1 oder 2, dadurch gekennzeichnet, dass die Verdampfung durch Ausblasen mit Luft oder Rauchgas und anschliessendes Auswaschen der Halogenwasserstoffe aus dem Gas mit Wasser erfolgt.

5. Verfahren gemäss einem der Ansprüche 1 bis 4, dadurch gekennzeichnet, dass nach der ersten Stufe des Wäschers Wasserdampf in das Rauchgas eingeleitet wird.

**Claims**

1. A process for the desulfurization of smoke gases containing $SO_2$ and hydrogen halides by catalytic oxidation of the sulfur dioxide on moist active carbon at temperatures of from 45 to 70°C to form 3 to 20% dilute sulfuric acid, characterized in that the dilute sulfuric acid is concentrated by evaporation to a sulfuric acid concentration of 60 to 85% in two stages by contact with the hot smoke gases to be desulfurized in co-current or counter-current heat exchangers and hydrogen chlorides and fluorides dissolved in the dilute sulfuric acid are removed by evaporation of a mixture of the dilute sulfuric acid from the second stage of the scrubber with the concentrated sulfuric acid from the first stage of the scrubber, the mixture having an $H_2SO_4$ concentration of 40 to 60%.

2. A process as claimed in claim 1, characterized in that the smoke gases to be desulfurized have a temperature of at least 120°C.

3. A process as claimed in claim 1 or 2, characterized in that evaporation is carried out by vacuum evaporation.

4. A process as claimed in claim 1 or 2, characterized in that evaporation is carried out by blowing out with air or smoke gas and subsequent washing out of the hydrogen halides from the gas with water.

5. A process as claimed in any of claims 1 to 4, characterized in that, after the first stage of the scrubber, steam is introduced into the smoke gas.

**Revendications**

1. Procédé pour la désulfuration de gaz de fumées contenant du $SO_2$ et des halogénures d'hydrogène, par oxydation catalytique du dioxyde de soufre sur du charbon actif humide à des températures de 45 à 70°C, avec formation d'acide sulfurique dilué à 3 à 20%, caractérisé en ce que l'acide sulfurique dilué est concentré en deux étapes par évaporation au contact des gaz de fumées chauds à désulfurer dans des échangeurs de chaleur à courant direct ou à contre-courant de manière à donner un acide sulfurique d'une concentration de 60 à 85%, et que les chlorure et fluorure d'hydrogène dissous dans l'acide sulfurique dilué sont éliminés par vaporisation à partir d'un mélange de l'acide sulfurique dilué du deuxième étage du laveur et de l'acide sulfurique concentré du premier étage du laveur, le mélange ayant ainsi une concentration en $H_2SO_4$ de 40 à 70%

2. Procédé selon la revendication 1, caractérisé en ce que les gaz de fumées à désulfurer ont une température d'au moins 120°C.

3. Procédé selon la revendication 1 ou 2, caractérisé en ce que la vaporisation se fait par évaporation sous vide.

4. Procédé selon la revendication 1 ou 2, caractérisé en ce que la vaporisation-expulsion se fait par soufflage d'air ou de gaz de fumées, suivi d'une élimination des halogénures d'hydrogène du gaz par lavage à l'eau.

5. Procédé selon l'une des revendications 1 à 4, caractérisé en ce que de la vapeur d'eau est introduite dans le gaz de fumées après le premier étage du laveur.

FIG. 1